**Europäisches Patentamt**

**European Patent Office**

**Office européen des brevets**

(11) Veröffentlichungsnummer: **0 271 169**

**A2**

# (12) EUROPÄISCHE PATENTANMELDUNG

(21) Anmeldenummer: 87202457.5

(22) Anmeldetag: 09.12.87

(51) Int. Cl.⁴: **H04Q 3/00**

(30) Priorität: 10.12.86 DE 3642141

(43) Veröffentlichungstag der Anmeldung:
15.06.88 Patentblatt 88/24

(84) Benannte Vertragsstaaten:
**DE FR GB SE**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB SE**

(72) Erfinder: **Wenzel, Robert, Dipl.-Ing.**
**Gartenstrasse 16**
**D-8501 Obermichelbach(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) Verfahren und Schaltungsanordnung zur dezentralen Netzersatzschaltung.

(57) Die Ersatzschaltung bei gestörten Betriebswegen erfolgt in der Regel durch Leitungsersatzschaltung oder durch zentral gesteuerte Netzersatzschaltung.

Bei der Leitungsersatzschaltung sind M-Betriebswegen, N-Ersatzwege fest zugeordnet, sodaß bei Störungen, die mehr als N-Betriebswege betreffen, bis zu M - N-Betriebswege ohne Ersatzschaltemöglichkeit verbleiben. Bei der zentral gesteuerten Netzersatzschaltung ist für das Einstellen des Ersatzweges sowohl die Meldung der Störung an die Zentrale als auch die Übertragung der Steuermeldung von der Zentrale an die Koppelfelder erforderlich. Der dazu erforderliche Zeitbedarf verursacht in der Regel die Auslösung sämtlicher über den gestörten Betriebsweg geführten Verbindung.

Durch eine dezentrale Netzersatzschaltung bei der die jeweils in Übertragungsrichtung der Störungsstelle nachfolgenden Ersatzwegesteuerungen die Masterfunktion für die jeweilige Übertragungsrichtung übernehmen, wird auf einfache Art und Weise unabhängig voneinander je ein Ersatzweg ermittelt, welcher nicht notwendigerweise auf der gleichen Trasse oder im gleichen Übertragungssystem geführt sein muß. Ohne daß die, die Störung detektierenden Überwachungseinrichtungen im Nachrichtenübertragungssystem miteinander kommunizieren müssen, kann somit sofort ein Ersatzweg für die jeweilige Übertragungsrichtung ermittelt und geschaltet werden.

FIG 2b

## Verfahren und Schaltungsanordnung zur dezentralen Netzersatzschaltung

Die Erfindung betrifft ein Verfahren zur dezentralen Netzersatzschaltung gemäß dem Oberbegriff des Patentanspruches 1.

Nachrichtenübertragungsnetze benutzen zur Erhöhung ihrer Verfügbarkeit die Möglichkeit der automatischen Ersatzschaltung einzelner Nachrichtenübertragungswege bei der Störung von Betriebswegen. Bei der Zuordnung von Ersatzwegen können zwei verschiedene Verfahren verwendet werden, nämlich die Leitungsersatzschaltung und die Netzersatzschaltung.

Bei der Leitungsersatzschaltung (dezentrale Konzeption) sind M-Betriebswegen zwischen zwei Leitungsenden (Endstellen der Übertragungsstrecke) N-Ersatzwege fest zugeordnet. Aus der DE-AS 27 53 420 ist eine Einrichtung zur Ersatzschaltung von Betriebssystemen für digitale Signale bekannt, bei der zur Einleitung einer Ersatzschaltung eines Betriebssystems das fünfte bis siebte Bit des Meldewortes durch die Adresse des umzuschaltenden Betriebssystems ersetzt wird. Von einer Leitungsendeinrichtung des Ersatzsystems wird diese Adresse als Quittungsmeldung in einer nicht für Adressen verwendeten Kombination an jene, die Adresse aussendende Leitungsendeinrichtung des Ersatzsystems zurückgesendet. Zur Überwachung der einzelnen Übertragungsabschnitte wird dabei das Rahmenkennungswort verwendet. Die Alarmmeldung erfolgt mittels eines sogenannten Alarmkennzeichens AIS (Alarm Indication Signal), welches von einem im Leitungs endgerät angeordneten AIS-Generator erzeugt wird und welches zur Unterdrückung von Folgealarmen auf den nachfolgenden Signalwegen verwendet wird. Dadurch wird vermieden, daß bei einer Störung im vorangegangenen Übertragungsabschnitt in den gesamten nachfolgenden Übertragungsabschnitten Alarmsignale auftreten.

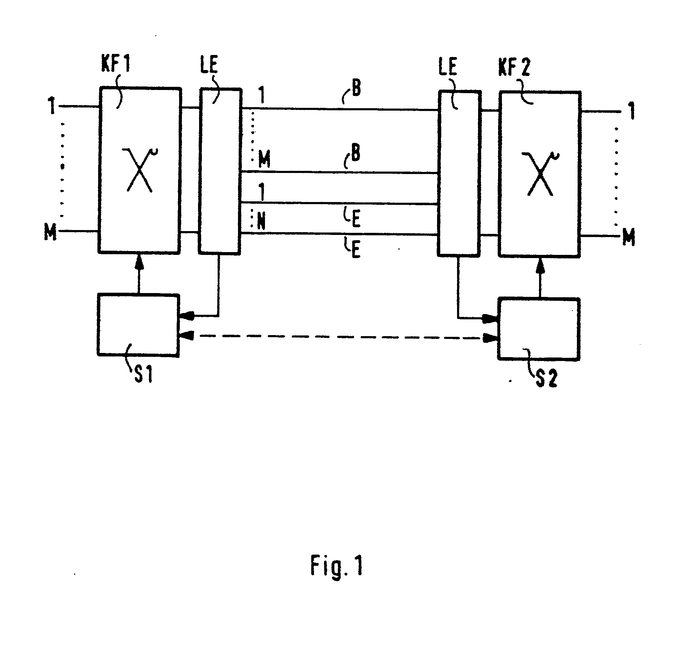

In Fig. 1 ist das Nachrichtenübertragungsnetz für ein solches Verfahren der Leitungsersatzschaltung dargestellt. Über die N-Ersatzwege E können, auch in einem vermaschten Netz, nur die den Leitungsendeinrichtungen LE zugeordneten Steuereinrichtungen S verfügen. Bei Störungen, welche mehr als N-Betriebswege betreffen, verbleiben bis zu M - N Betriebswege ohne Ersatzschaltungsmöglichkeit.

Die Überwachung der Übertragungswege und die Umsteuerung der Betriebswege B auf die Ersatzwege E erfolgt durch die an den Leitungsenden angeordneten Steuereinrichtungen S1, S2. Sollen beide Übertragungsrichtungen (auch die möglicherweise ungestörte entgegengesetzte Richtung) ersatzgeschaltet werden, so ist vor der Ersatzschaltung ein Datenaustausch zwischen den an den Leitungsenden angeordneten Steuereinrichtungen S1, S2 notwendig. Eine der den Leitungsendeinrichtungen LE zugeordneten Steuereinrichtungen S1 muß dabei die Masterfunktion für beide Übertragungsrichtungen übernehmen.

Bei der 1:1 (d.h. M = N = 1) Leitungsersatzschaltung besteht nicht die Notwendigkeit des Datenaustausches zwischen den Steuereinrichtungen S, da Ersatz-und Betriebsweg E, B gleichzeitig das Betriebssignal führen und somit bei einer Störung nur umgeschaltet werden muß.

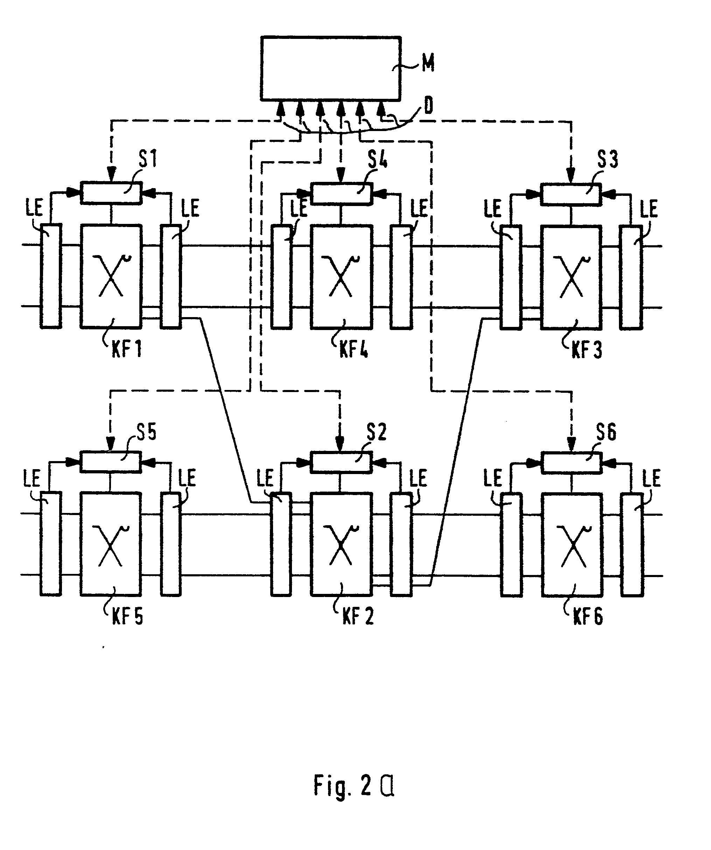

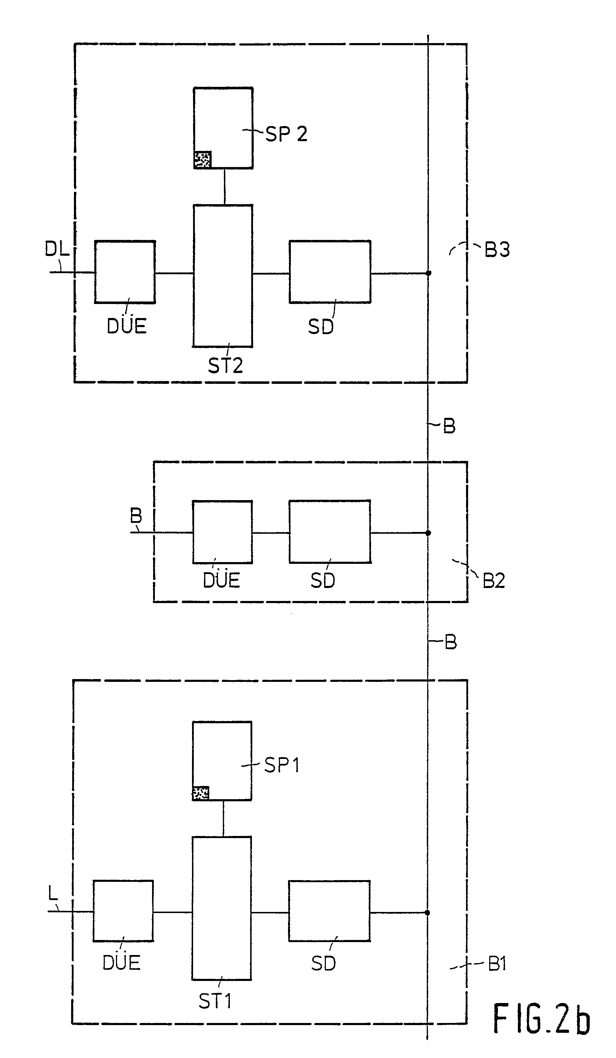

Bei der Netzersatzschaltung in einem vermaschten Übertra gungsnetz besteht die Möglichkeit für M-Betriebswege B, bei N M Ersatzwegen E zwischen Ersatzschaltepunkten (Ersatzschaltekoppelfeldern), mehr als N-Ersatzwege E zu schalten, solange im Netz noch freie Ersatzwege E verfügbar sind. Das wird durch großräumige Umgehung der gestörten Betriebswege B erreicht, die es erlaubt, außer den N direkt zugeordneten Ersatzwegen E auch weitere Ersatzwege E zu schalten. Für eine Netzersatzschaltung wird bisher ausschließlich eine zentrale Konzeption, d.h. Steuerung der Netzersatzschaltung durch Zentralstelle M, angewandt. In Fig. 2 ist die Netzstruktur bei einer zentralen Netzersatzschaltung dargestellt.

Zur Unterdrückung von Folgealarmen, z.B. bei Signalverlust, wird in der digitalen Übertragungstechnik das Alarmkennzeichen AIS verwendet, welches in der auf 2,048 Mbit/s aufbauenden digitalen Hierarchie ein Dauer-1-Signal ist. Aus der EP-B1-0 031 943 ist eine Überwachung von Übertragungsstrecken für digitale Signale bekannt, bei dem ein im Leitungsendgerät LE angeordneter AIS-Generator ein Signal erzeugt, welches zur Unterdrückung von Folgealarmen auf dem nachfolgenden Signalweg dient. Dadurch wird vermieden, daß bei einer Störung in der vorgeschalteten Übertragungsstrecke im gesamten nachfolgenden Streckenabschnitt Alarmsignale auftreten. Bei der aus der EP-B1-0 031 943 bekannten zentralen Netzersatzschaltung sind auch in den Zwischenregeneratoren solche AIS-Generatoren angeordnet.Die Leitungsendgeräte LE enthalten neben den AIS-Generatoren auch Überwachungseinrichtungen, welche über eine Steuerleitung D mit der zentralen Netzüberwachungsstelle M verbunden sind. Sämtliche Störungen werden zunächst an die Zentralstelle M gemeldet, und diese Zentralstelle M gibt aufgrund der Kenntnis des Netzzustands die entsprechenden Steuerbefehle an die betroffenen Ersatzschaltesteuerungen KF1, KF2, ... ab. Von der Zentralstelle M aus kann auch ferngesteuert der AIS-Generator über einen Umschalter mit dem Ausgang des empfangsseitigen Leitungsendgerätes LE verbunden werden.

Konfliktsituationen sind bei der zentralen Netzersatzschaltung nicht möglich, selbst wenn Störungsmeldungen von einzelnen Abschnitten zeitlich unkoordiniert und für beide Übertragungseinrichtungen zu unterschiedlichen Zeiten bei der Zentralstelle M eintreffen. In der Zentralstelle M ist stets das aktuelle Netzabbild gespeichert, welches für die Ersatzschaltesteuerung herangezogen wird.

Das vorstehend geschilderte Verfahren zur zentralen Netzersatzschaltung weist die Nachteile auf, daß grundsätzlich zwei Informationsübertragungsvorgänge notwendig sind, nämlich Meldung der Störung an die Zentralstelle M und Übertragung der Steuermeldung an die Ersatzschaltesteuerungen KF1, KF2, ..., und den dafür erforderlichen Zeitbedarf.

Der Erfindung liegt die Aufgabe zugrunde, ein Verfahren zur dezentralen Netzersatzschaltung von Betriebswegen in einem Nachrichtenübertragungsnetz anzugeben, bei dem der Ersatzschaltevorgang in kürzester Zeit durchgeführt wird.

Diese Aufgabe wird erfindungsgemäß durch ein Verfahren mit den Merkmalen des Patentanspruchs 1 gelöst.

Das erfindungsgemäße Verfahren weist den Vorteil auf, daß ohne Einbeziehung einer Zentralstelle der Ersatzschaltevorgang beschleunigt wird, wodurch zuverlässig das Auslösen bestehender Verbindungen verhindert wird. Bei der dezentralen Netzersatzschaltung sind die Ersatzwegesteuerungen vollständig über Datenleitungen miteinander vermascht und die für eine Netzersatzschaltung relevanten Informationen werden in einem Datenübertragungsnetz über gegen Übertragungsfehler gesicherte Verbindungen übertragen.

Um die Bearbeitungszeit bei einer Ersatzschaltung (Aktionskette: Störungsdetektion, Störungsbearbeitung, Ersatzwegermittlung, Koppelfeldsteuerung) noch weiter zu reduzieren, kann z.B. vorab eine vorgegebene Anzahl von Ersatzwegen ermittelt und in den Ersatzwegesteuerungen abgespeichert werden. Im Störungsfall werden aus dem zugeordneten Speicher die Ersatzwege ausgelesen und die Steuerung der Netzersatzschaltung für beide Übertragungsrichtungen eines Betriebsweges getrennt mittels der voneinander unabhängigen und zur Störungsstelle in Übertragungsrichtung benachbarten Ersatzwegesteuerungen durchgeführt. Der maximale Speicheraufwand ergibt sich, wenn alle ersatzschalterelevanten Informationen (das aktuelle Netzabbild) in den Ersatzwegesteuerungen abgespeichert wird. In der Regel wird jedoch lediglich das Netzabbild des eigenen und der benachbarten Bezirke für eine begrenzte Anzahl von Ersatzwegen gespeichert.

Beim erfindungsgemäßen Verfahren erfolgt keine Kommunikation der Ersatzwegesteuerung mit der zur Störungsstelle benachbarten Ersatzwegesteuerung um bei einer Störung festzulegen, welche der beiden betroffenen Ersatzwegesteuerungen die Ersatzschaltung beider Übertragungsrichtungen als Hauptstelle steuert. Dadurch, daß jeweils die in Übertragungsrichtung der Störungsstelle nachfolgende Ersatzwegesteuerung nur die Ersatzschaltung dieser Übertragungsrichtung veranlaßt, kann auf einfache Art und Weise eine Konfliktsituation vermieden werden.

Diese Konfliktsituation ergibt sich daraus, daß es in der Regel von Vorteil ist, die beiden übertragungsrichtungen eines Betriebsweges auch im Ersatzschaltefall gemeinsam auf einer Trasse zu führen, d. h. auf den für diese Verbindung zwischen den Betriebsstellen zusammengehörigen und eine Übertragungsstrecke bildenden Koaxial- oder Glasfaser-Paar.

Bei der dezentralen Netzersatzschaltung wird ein Ersatzweg in der Ersatzwegesteuerung in der in Übertragungsrichtung der Störungsstelle nachfolgenden Ersatzschaltesteuerungstelle ermittelt. Bei der Unterbrechung eines mehrere Systeme führenden Kabels an den Enden des Überwachungsabschnitts, können Störungsmeldungen für die einzelnen Systeme und Übertragungsrichtungen zu verschiedenen Zeiten und in unterschiedlicher Reihenfolge auftreten.

Um das Auslösen bestehender Fernsprechverbindungen zu verhindern, ist die Ersatzschaltung ungefähr innerhalb einer Sekunde vorzunehmen, wobei für die Detektion einer Störung nur eine geringe Zeit von ungefähr 100ms zur Verfügung steht.

Beim erfindungsgemäßen Verfahren übernehmen die Ersatzwegesteuerungen, welche jeweils in Übertragungsrichtung der Störungsstelle nachfolgen, die Masterfunktion für die jeweilige Übertragungsrichtung. Die beiden Ersatzwegesteuerungen ermitteln bei der Störung beider Übertragungsrichtungen je einen Ersatzweg, welcher in Grenzfällen nicht notwendigerweise auf der gleichen Trasse oder im gleichen Übertragungssystem geführt sein muß. Es ist jedoch zuverlässig ausgeschlossen, daß auf ein-und denselben Ersatzweg zwei unterschiedliche Betriebswege geschaltet werden.

Beim erfindungsgemäßen Verfahren wird, ohne daß die beiden die Störung detektierenden Ersatzwegesteuerungen miteinander kommunizieren müssen, sofort ein Ersatzweg für die jeweilige Richtung komplikationslos ermittelt und geschaltet. Hierzu werden von der Ersatzwegesteuerung aus sämtliche für die Ersatzschaltung benötigten Unterstationen, z.B. Ersatzschaltekoppelfelder fremder Überwachungsstationen, ferngesteuert.

Erst in einem zweiten Schritt wird, falls die Betriebsführung des Nachrichtenübertragungsnetzes dies erfordert, jeder Übertragungsweg für sich auf einen gemeinsamen Übertragungsweg für die zusammengehörigen Richtungen geschaltet. Dieser gemäß dem Verfahren nach Patentanspruch 2 vorgenommene Umschaltevorgang kann in betriebsschwachen Zeiten vorgenommen werden. Hierbei ist eine der Ersatzwegesteuerungen die Hauptstelle für beide Übertragungsrichtungen. Diese Hauptfunktion wurde zuvor bei der Einrichtung des Betriebswegs festgelegt.

Wird gemäß Patentanspruch 3 zur Vermaschung der Ersatzwegesteuerungen das Paketdatennetz benutzt, so ist der zusätzliche Aufwand für die Vermaschung der Ersatzwegesteuerungen gering.

Durch das Verfahren gemäß Patentanspruch 4 wird der Speicheraufwand und die Bearbeitung einer dezentralen Netzersatzschaltung in den Ersatzwegesteuerungen auf einfache Art und Weise reduziert.

Die Schaltungsanordnung zur Durchführung des erfindungsgemäßen Verfahrens erfordert einen geringen zusätzlichen Schaltungsaufwand, da bereits im Nachrichtenübertragungsnetz vorhandene Einrichtungen zur dezentralen Netzersatzschaltung mitbenutzt werden können. Dieser zusätzliche Schaltungsaufwand wird im wesentlichen durch den höheren Speicheraufwand für die Ersatzwegenetzabbilder bestimmt.

Die Erfindung wird im folgenden anhand einer in der Zeichnung dargestellten Ausführungsform näher beschrieben und erläutert. Es zeigt:

Fig. 1 die Netzstruktur bei einer bekannten Leitungsersatzschaltung,

Fig. 2a ein Beispiel für die Netzstruktur bei einer bekannten zentralen Netzersatzschaltung,

Fig. 2b das Blockschaltbild einer Schaltungsanordnung zur Durchführung des erfindungsgemäßen Verfahrens,

Fig. 3 ein Beispiel für die Netzstruktur bei erfindungsgemäßer dezentraler Netzersatzschaltung und Störung eines Betriebsweges in einem Bezirk und

Fig. 4 ein Beispiel für die Netzstruktur bei erfindungsgemäßer dezentraler Netzersatzschaltung und Störung eines Betriebsweges zwischen benachbarten Bezirken.

Fig. 2b zeigt das Blockschaltbild einer Schaltungsanordnung zur Durchführung des erfindungsgemäßen Verfahrens. In jeder Betriebsstelle B 1, ..., Bm ist eine Störungsdetektionsschaltung SD angeordnet ist, an welche eine mit dem Nachrichtenübertragungsnetz verbundene Datenübertragungseinrichtung DÜE angeschlossen ist. Die Ersatzwegesteuerungen ST 1, ..., STn sind einerseits jeweils mit einem das Ersatzwegenetzabbild enthaltende Speicher SP 1, ...SPn und andererseits mit den Datenübertragungseinrichtungen DÜE verbunden.

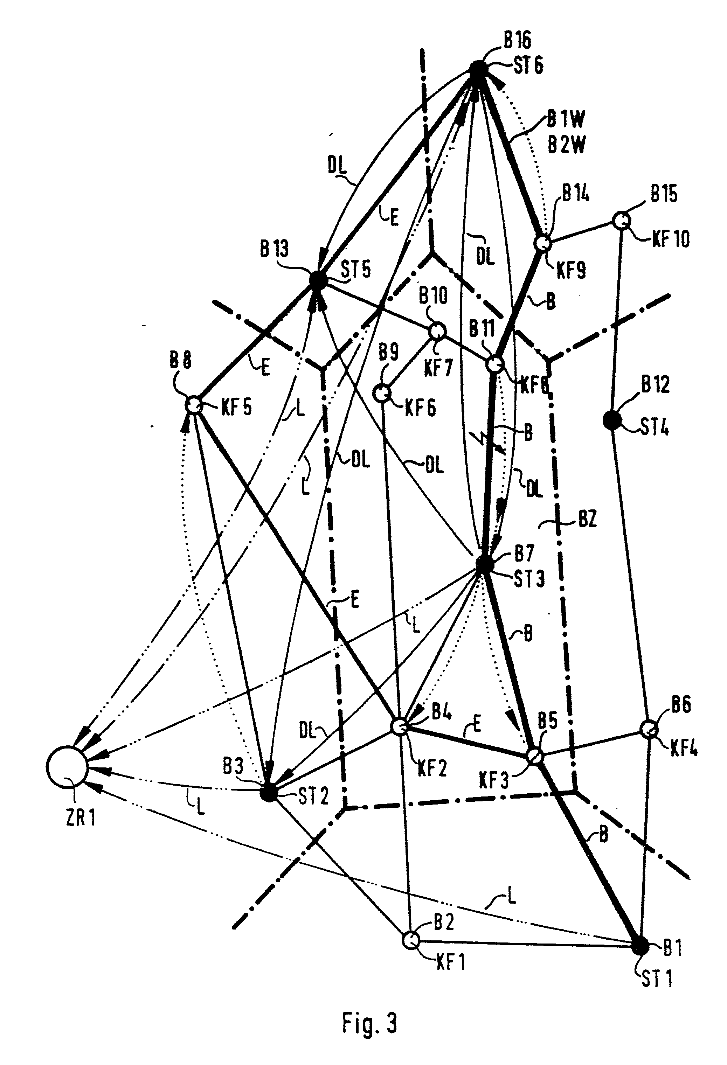

Das erfindungsgemäße Verfahren der dezentralen Netzersatzschaltung wird im folgenden an Hand der in Fig. 3 dargestellten Netzstruktur näher erläutert.

Im Nachrichtenübertragungsnetz sind Betriebsstellen B1, ..., Bm angeordnet, welche über Betriebswege B und Ersatzwege E miteinander verbunden sind. Das Nachrichten übertragungsnetz ist in Bezirke BZ unterteilt und jedem Bezirk ist in genau einer der Betriebsstellen, z.B. B7, B13 und B16, eine Ersatzwegesteuerung, z.B. ST3, ST5 und ST6, zugeordnet. In der Fig. 3 sind Betriebsstellen Bm mit Ersatzwegesteuerung STn und Koppelfeldern KFo durch das Symbol angedeutet. Betriebsstellen Bm mit Koppelfeldern KFo sind in Fig. 3 mit dem Symbol hervorgehoben.

Die Ersatzwegesteuerungen STn sind vollständig miteinander über Datenleitungen DL vermascht. Jeder Bezirk BZ enthält nur eine Ersatzwegesteuerung z.B. ST3 mit Koppelfeld und mehreren dieser zugeordneten ferngesteuerte Betriebsstellen mit Koppelfeldern z.B. B11 mit KF8. In den Ersatzwegesteuerungen STn ist mindestens das Netzabbild des eigenen und der benachbarten Bezirke BZ gespeichert. Die Steuerung der dezentralen Netzersatzschaltung für beide Übertragungsrichtungen eines Betriebsweges B erfolgt mittels der voneinander unabhängigen und zur Störungsstelle benachbarten Ersatzwegesteuerungen STn. Für die nachfolgende Erläuterung des erfindungsgemäßen Verfahrens sei angenommen, daß eine Verbindung zwischen den Betriebsstellen B1, B5, B7, B11, B14 und B16 besteht.

Zwischen den Betriebsstellen B7 und B11 tritt nun eine Störung auf. Werden beide Übertragungsrichtungen von der Störung betroffen, so wird die Störung der einen Übertragungsrichtung in der Betriebsstelle B7 mit der Ersatzwegesteuerung ST3 detektiert, während die Störung in der anderen Übertragungsrichtung von der Betriebsstelle B11 detektiert wird. Diese Betriebsstelle B11 meldet die Störung an die Betriebsstelle B7 (Verbindungsweg durch punktierte Linie angedeutet), sodaß dort die Meldungen einer Störung für beide Übertragungsrichtungen zusammentreffen.

Die in der Betriebsstelle B7 angeordnete Ersatzwegesteuerung ST3 liest aus dem Speicher den für die vorliegende Betriebsstörung zu wählenden Ersatzweg E über die Betriebsstellen B4, B8, B13 und B16 aus. Von der, in der Betriebsstelle B7 angeordneten Ersatzwegesteuerung ST3 aus zu steuernden Betriebsstellen B_m, liegen die Betriebsstellen B5 und B4 innerhalb des eigenen Bezirks BZ und können deshalb von der Ersatzwegesteuerung ST3 direkt angesteuert werden. Von der Ersatzwegesteuerung ST3 werden die in den Betriebsstellen B5 und B4 angeordneten Koppelfelder KF3 bzw. KF2 entsprechend umgeschaltet.

Die Betriebsstellen B8, B13 und B16 liegen in fremden Bezirken BZ, wobei das in der Betriebsstelle B8 angeordnet Koppelfeld KF5 von der in der Betriebsstelle B3 angeordneten Ersatzwegesteuerung ST2 ferngesteuert wird. Die Ersatzwegesteuerung ST3 hat deshalb nur indirekten Zugriff über die Ersatzwegesteuerung ST2 auf das in der Betriebsstelle B8 angeordnete Koppelfeld KF5.

Weiterhin ist im Nachrichtenübertragungsnetz eine zentrale Netzüberwachungsstelle ZR1 angeordnet, welche über Leitungen L mit den Ersatzwegesteuerungen STn verbunden ist. In der zentralen Netzüberwachungsstelle ZR1 wird das Netzabbild gespeichert. Nachdem der Ersatzweg E über die Betriebsstellen B5, B4, B8, B13 und B16 geschaltet wurde, erfolgt von den in den Betriebsstellen B7, B3, B13 und B16 angeordneten Ersatzwegesteuerungen ST3, ST2, ST5 und ST6 eine Meldung an die Zentralstelle ZR1 über den geschalteten Ersatzweg E. Von der Zentralstelle ZR1 erfolgt sofort eine Meldung an alle Ersatzwegesteuerungen STn, welche Teile des nun belegten Ersatzweges E für eigene Ersatzschaltezwecke verwenden wollen, um diesen Ersatzweg bzw. die Teile des Ersatzweges für weitere dezentrale Netzersatzschaltungen zu sperren. Danach ermittelt die Zentralstelle ZR1 die Ersatzwegeführung im Nachrichtenübertragungsnetz neu und meldet die neue Ersatzwegführung an die Ersatzwegesteuerungen STn.

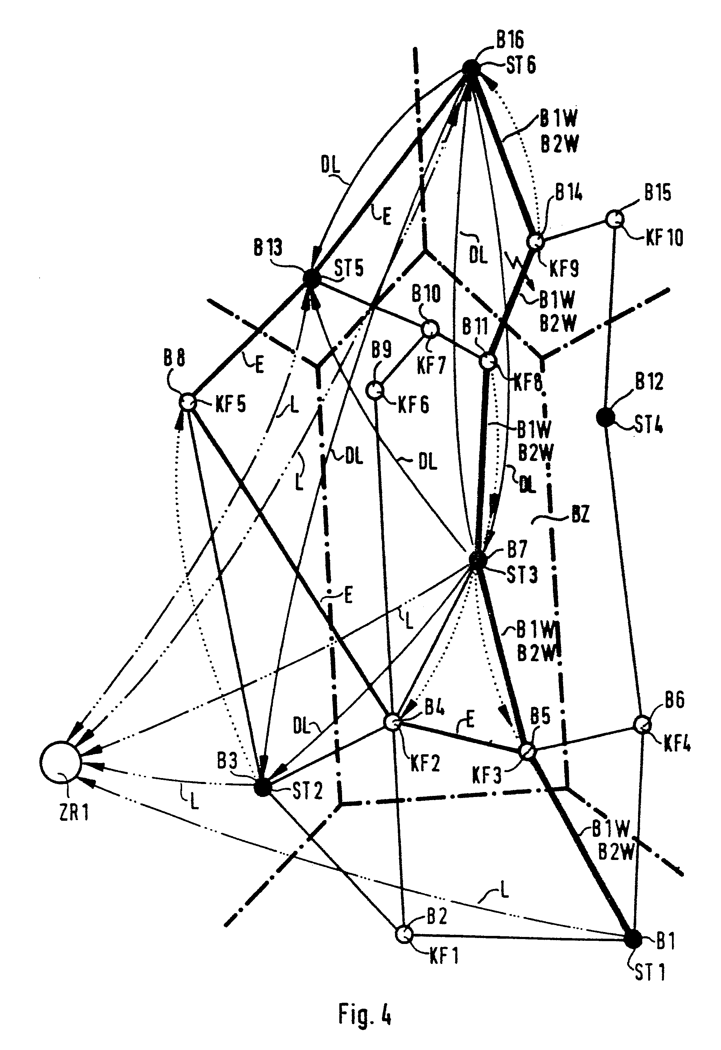

An Hand Fig. 4 soll die dezentrale Netzersatzschaltung bei einer Störung des Betriebsweges B zwischen in benachbarten Bezirken BZ angeordneten Betriebsstellen Bm näher erläutert werden. Im folgenden sei angenommen, daß der Betriebsweg B zwischen den Betriebsstellen B11 und B14 gestört ist.

Der Steuerungsablauf durch die in der Betriebsstelle B7 angeordnete Ersatzwegesteuerung ST3 erfolgt in gleicher Art und Weise wie vorstehend an Hand Fig. 3 näher erläutert wurde. Für die zweite Übertragungsrichtung, welche von der Betriebsstelle B14 überwacht und das Auftreten der Störung an die in der Betriebsstelle B16 angeordnete Ersatzwegesteuerung ST6 gemeldet wird, erfolgt bei einer beide Übertragungsrichtungen betreffenden Betriebsstörung eine von dem Steuerungsablauf durch die Ersatzwegesteuerung ST3 unabhängige und unbeeinflußte Ermittlung eines Ersatzweges E in der in der Betriebsstelle B16 angeordneten Ersatzwegesteuerung ST6. Bedingung hierfür ist eine fast gleichzeitige Störung beider Übertragungsrichtungen.

Unter der Voraussetzung, daß für beide Übertragungsrichtungen vorab in den beiden Ersatzwegesteuerungen ST6 und ST3 der gleiche Erstersatzweg E abgespeichert wurde, erfolgt ausgehend von der Ersatzwegesteuerung ST6 die Umsteuerung auf den auch in der Ersatzwegesteuerung ST3 ermittelten Ersatzweg.

Für den Fall, daß fast gleichzeitig mehrere Übertragungswege in beiden Übertragungsrichtungen gestört sind (z.B. bei Kappung eines mehrfaserigen, mehrpaarigen Kabels) kann es vorkommen, daß -durch die voneinander unabhängige Ermittlung der jetzt in größerer Zahl notwendigen Ersatzwege E _n in den Ersatzwegesteuerungen STn und den in unterschiedlicher Reihenfolge erfolgenden Ausfall der Übertragungswege - nicht zusammengehörige Betriebswege BnW auf denselben Ersatzweg E geschaltet werden (z.B. Richtung a des Betriebsweges B1W zwischen den Betriebsstellen B1 und B5, B7, B11, B14, B16 mit Richtung b des Betriebsweges B2W zwischen den Betriebsstellen B1 und B5, B11, B14, B16). Solange für alle ausgefallenen Betriebswege BnW Ersatzwege En gefunden werden, hat dies keine nachteiligen Folgen. In betriebsschwachen Zeiten kann, falls dies von der Betriebsüberwachung verlangt wird, eine nachträgliche Umschaltung der so überkreuzten Übertragungswege erfolgen.

Durch das erfindungsgemäße Verfahren zur dezentralen Netzschaltung wird also auf überraschend einfache Art und Weise innerhalb kürzester Zeit eine Umschaltung des gestörten Betriebsweges B auf einen Ersatzweg E geschaffen. Der zusätzliche in den Ersatzwegesteuerungen ST_nauftretende Speicheraufwand ist relativ gering.

**Ansprüche**

1. Verfahren zur dezentralen Netzersatzschaltung von Betriebswegen (B) in einem Nachrichtenübertragungsnetz mit Betriebsstellen (B1, ..., Bm), Ersatzwegen (E), Koppelfeldern (KF1, ..., KFo) und Ersatzwegesteuerungen (ST1, ..., STn), dadurch gekennzeichnet, daß das Nachrichtenübertragungsnetz in Bezirke (BZ) unterteilt ist und jedem Bezirk (BZ) genau eine in einer Betriebsstelle (B1, ..., Bm) angeordnete Ersatzwegesteuerung (ST1, ..., STn) zugeordnet ist, daß die Ersatzwegesteuerungen (ST1, ..., STn) vollständig miteinander über Datenleitungen (DL) vermascht sind und mindestens das Ersatzwegenetzabbild des eigenen und der benachbarten Bezirke (BZ) speichern und daß die Steuerung der Netzersatzschaltung für beide Übertragungsrichtungen eines Betriebsweges (B) mittels voneinander unabhängiger und zur Störungsstelle benachbarter Ersatzwegesteuerungen (ST1, ..., STn) erfolgt.

2. Verfahren nach Anspruch 1, dadurch gekennzeichnet, daß die Ersatzwegesteuerungen (ST1, ..., STn) beider Übertragungsrichtungen die Umschaltung jeweils der anderen Übertragungsrichtung auf den gleichen Ersatzweg (E) vornehmen.

3. Verfahren nach Anspruch 1, dadurch gekennzeichnet, daß zur Vermaschung der Ersatzwegesteuerungen (ST1, ..., STn) das Paketdatennetz benutzt wird.

4. Verfahren nach Anspruch 1, dadurch gekennzeichnet,daß im Nachrichtenübertragungsnetz eine zentrale Netzüberwachungsstelle (ZR1) angeordnet ist, welche das aktuelle Netzabbild gespeichert hat und welche über Leitungen (L) mit den Ersatzwegesteuerungen (ST1, .... STn) verbunden ist und welche das für diese relevante Ersatzwegeabbild speichern und daß nach einer Netzersatzschaltung die zentrale Netzüberwachungsstelle (ZR1) die Ersatzwegeführung im Nachrichtenübertragungsnetz neu ermittelt und mindestens Teile des neuen Ersatzwegeabbilds in den Ersatzwegesteuerungen (ST1, ..., STn) abgespeichert werden.

5. Schaltungsanordnung zur Durchführung des Verfahrens nach Anspruch 1, dadurch gekennzeichnet, daß in jeder Betriebsstelle (B1, ..., Bm) eine Störungsdetektionsschaltung (SD) angeordnet ist, daß die Störungsdetektionsschaltung (SD) an eine mit dem Nachrichtenübertragungsnetz verbundene Datenübertragungseinrichtung (DÜE) angeschlossen ist und daß die Ersatzwegesteuerungen (ST1, ...,STn) einerseits jeweils mit einem das Ersatzwegenetzabbild enthaltendenSpeicher (SP1, ... SPn) und andererseits mit den Datenübertragungseinrichtungen (DÜE) verbunden sind.

Fig.1

Fig. 2 a

FIG.2b

Fig. 3

Fig. 4